# EUROPÄISCHE PATENTSCHRIFT

(11) **EP 4 076 114 B1**
(45) Veröffentlichungstag und Bekanntmachung des Hinweises auf die Patenterteilung: **21.08.2024**
(21) Anmeldenummer: 20838388.5
(22) Anmeldetag: 16.12.2020
(51) Int. Cl.: A47J 42/10, A47J 42/20, A47J 42/46

(54) **MAHLWERK, MAHLSCHEIBE FÜR EIN MAHLWERK, UND KAFFEEMASCHINE MIT EINEM SOLCHEN MAHLWERK**
GRINDER, GRINDING DISK FOR A GRINDER, AND COFFEE MACHINE HAVING A GRINDER OF THIS TYPE
BROYEUR, DISQUE DE BROYAGE POUR UN BROYEUR ET MACHINE À CAFÉ ÉQUIPÉE D'UN TEL BROYEUR

(30) Priorität: 18.12.2019 DE 102019134875
(43) Veröffentlichungstag der Anmeldung: 26.10.2022
(73) Patentinhaber: Melitta Professional Coffee Solutions GmbH & Co. KG, 32429 Minden (DE)
(72) Erfinder: HENSEL, Armin, 32369 Rahden (DE); BUCHHOLZ, Bernd, 32369 Rahden (DE)
(74) Vertreter: Specht, Peter
(86) Internationale Anmeldenummer: PCT/EP2020/086360
(87) Internationale Veröffentlichungsnummer: WO 2021/122700

(56) Entgegenhaltungen:
- EP-A1- 2 050 377
- EP-A1- 2 956 039
- EP-B1- 2 956 039
- CH-A- 262 751
- DE-U1- 202017 100 154
- US-A1- 2009 134 255

## Beschreibung

Die Erfindung betrifft ein Mahlwerk zum Mahlen von Kaffeebohnen nach dem Oberbegriff des Anspruchs 1 sowie eine Mahlscheibe und eine Kaffeemaschine, insbesondere einen Kaffeevollautomaten, mit einem solchen Mahlwerk.

Aus dem Stand der Technik sind im Wesentlichen zwei bewährte Bauarten von Kaffeemahlwerken bekannt, die in Kaffeemaschinen eingesetzt werden. Zum einen Scheibenmahlwerke und zum anderen Kegelmahlwerke. Beide Mahlwerksarten haben gemein, dass sie aus zwei Mahlscheiben bestehen, wobei eines dieser Werkzeuge fixiert ist und das andere angetrieben wird. Durch die Rotationsbewegung der einen Mahlscheibe werden die zu mahlenden Kaffeebohnen in einen Mahlspalt eingezogen und über die sich verjüngenden Mahlspaltweite immer feiner gemahlen. Der kleinste Abstand der beiden Mahlscheiben ist maßgebend für den erzeugten Mahlgrad des Kaffeepulvers.

In der Regel werden Mahlscheiben in Scheibenmahlwerken mittels Anschraublöcher mit Schrauben an den jeweiligen Trägern fixiert. Diese Löcher reduzieren einerseits die Schnittleistung der Mahlscheibe. Andererseits kann sich in diesen Bereichen Kaffeemehl ablagern und wird somit nicht vollständig aus dem Mahlwerk ausgegeben.

In der Patentschrift EP1493368B1 wird eine weitere Möglichkeit der Aufnahme beschrieben. Die Mahlscheiben werden mittels eines Bajonettverschlusses in den jeweiligen Träger eingedreht. Dafür befinden sich am Umfang der Mahlscheiben längliche unterbrochene Erhebungen, die über eine Steck-Drehbewegung in einen Trägerschlitz eingebracht werden. Da das Mahlwerk immer nur in eine Rotationsrichtung betrieben wird, sind Scheibe und Träger verdrehgesichert und die Scheiben sind zudem in einem axialen Freiheitsgrad gesperrt.

Die Erfindung hat daher die Aufgabe, ein gattungsgemäßes Mahlwerk funktional vorteilhaft weiterzuentwickeln.

Die Erfindung löst diese Aufgabe durch ein Mahlwerk mit den Merkmalen des Anspruchs 1, eine Mahlscheibe mit dem Merkmal des Anspruchs 14 und eine Kaffeemaschine des Anspruchs 15.

Ein erfindungsgemäßes Mahlwerk zum Mahlen von Kaffeebohnen umfasst einen ersten Mahlscheibenträger mit einer ersten Mahlscheibe, einen zweiten Mahlscheibenträger mit einer zweiten Mahlscheibe und eine Antriebseinheit, durch welche mindestens eine der beiden Mahlscheiben drehbar betrieben ist. Zumindest diejenige Mahlscheibe der beiden Mahlscheiben, welche durch die Antriebseinheit drehbar betrieben ist, ist mit der Antriebseinheit direkt oder indirekt über einen zentrischen Formschluss gekoppelt, wobei dieser zentrische Formschluss als durchgehende Wellen-Naben-Verbindung einer unmittelbaren Drehmomentübertragung von der Antriebseinheit direkt oder indirekt auf die Mahlscheibe ausgebildet ist.

Zur Übertragung eines Antriebsmomentes von der Antriebseinheit auf die Mahlscheibe ist es vorteilhaft, einen Formschluss zwischen Mahlscheibe und Träger zu erzielen, der große Kräfte überträgt und gleichzeitig keine störenden Öffnungen verursacht, in denen sich Kaffeemehl absetzen kann

Das erfindungsgemäße Mahlwerk dient zum Mahlen von Kaffeebohnen. Es kann als Stand-Alone Gerät oder aber integriert in einer Kaffeemaschine, z.B. einem Kaffeevollautomaten genutzt werden.

Eine erfindungsgemäße Mahlscheibe für das oben angegebene Mahlwerk weist einen Durchbruch mit einer zentrischen Innenkontur auf. Die ist für einen einfachen und schnellen Zusammenbau bzw. Wechsel von großem Vorteil.

Erfindungsgemäß weist die zweite Mahlscheibe, welche durch die Antriebseinheit drehbar betrieben ist, einen Durchbruch mit einer zentrischen Innenkontur auf, welche mit einer zentrischen Kontur eines Trägers des zweiten Mahlscheibenträgers formschlüssig in Eingriff steht, wobei der Träger mit einer Antriebswelle der Antriebseinheit verbunden ist.

Eine erfindungsgemäße Kaffeemaschine, insbesondere Kaffeevollautomat weist das oben beschriebene Mahlwerk auf.

Einen besonderen Vorteil ergibt der Formschluss am inneren Durchgangsbereich der Mahlscheibe, der in der Regel als einfaches Loch ausgebildet ist und wo an dieser Stelle beim Mahlvorgang noch kein fein gemahlenes Kaffeemehl vorhanden ist. Der Durchgang ist als formschlüssige Kontur ausgeführt. So können vorteilhaft besonders große Antriebsmomente und Haltemomente übertragen werden, und es entstehen keine störenden Geometrien am Außendurchmesser der Mahlscheiben.

Ein weiterer besonderer Vorteil besteht darin, dass die im Gegensatz zum Stand der Technik keine Anschraublöcher mit Schrauben aufweisen, wodurch die Schnittleistung der Mahlscheibe nicht beeinträchtigt wird, und wodurch sich in diesen Bereichen kein Kaffeemehl ablagern kann. Das Kaffeemehl kann daher vollständig ausgegeben werden.

In weiterer Ausgestaltung weist der Träger des zweiten Mahlscheibenträgers einen Ringabschnitt auf, welcher um die zentrische Kontur herum angeordnet ist. Damit wird eine einfache und Auflagefläche für die zweite Mahlscheibe erzielt.

Es ist zudem vorteilhaft, wenn der Träger des zweiten Mahlscheibenträgers einen Freiraum aufweist, welcher von dem Ringabschnitt und der zentrischen Kontur festgelegt ist. Damit wird eine einfache zusätzliche Aufnahme eines Abschnitts der Mahlscheibe geschaffen.

Eine weitere Ausführung sieht vor, dass die erste Mahlscheibe und die zweite Mahlscheibe jeweils einen Durchbruch mit einer zentrischen Innenkontur aufweisen, wobei die erste Mahlscheibe mit ihrer zentrischen Innenkontur mit einem zentrischen Konturvorsprung eines Trägers des ersten Mahlscheibenträgers formschlüssig in Eingriff steht. Damit ergibt sich der Vorteil, dass nur eine Mahlscheibenausgestaltung für das Mahlwerk erforderlich ist, wobei beide Mahlscheiben identisch sein können. Wenn der Konturvorsprung des Trägers des ersten Mahlscheibenträgers einen zentrischen Durchbruch aufweist, wird es vorteilhaft ermöglicht, dass dieser zentrische Durchbruch den Kaffeebohnen aus einem Einfülltrichter einen Zugang zu einer Mahlkammer zwischen den Mahlscheiben bildet.

Erfindungsgemäß nach Anspruch 14 ist es vorgesehen, dass die erste Mahlscheibe und die zweite Mahlscheibe jeweils radial hervorstehende Nasen aufweisen, die an den Außenumfängen der ersten Mahlscheibe und der zweiten Mahlscheibe regelmäßig verteilt angeformt sind. Diese Nasen werden auch als Schnappnasen bezeichnet und dienen vorteilhaft für eine axiale Sicherung der Mahlscheiben in dem jeweiligen Mahlscheibenträger. Da das Moment für die jeweilige Mahlscheibe über den Formschluss der Kontur des Trägers und der Innenkontur am inneren Durchgang der jeweiligen Mahlscheibe übertragen wird, können die Nasen sehr filigran ausgeführt werden, da sie kein Drehmoment übertragen. Bei der ersten Mahlscheibe ist das zugehörige Moment ein Haltemoment, wenn die erste Mahlscheibe stillsteht. Im Fall der zweiten Mahlscheibe, die von der Antriebseinheit betrieben wird, ist das zugehörige Moment ein Antriebsmoment.

Aufgrund dieser konstruktiven Ausführung ist es außerdem vorteilhaft möglich, die untere und obere Mahlscheibe als Gleichteil zu gestalten.

In einer noch weiteren Ausführung ist die erste Mahlscheibe in einen Träger des ersten Mahlscheibenträgers eingesetzt und in dem Träger axial geführt und mittels der Nasen axial gesichert. Diese erste Mahlscheibe bzw. auch obere Mahlscheibe genannt, kann in weiterer Ausgestaltung inklusive Druckfedern für eine Kraftsteuerung bleibend in einen Kunststoffträger eingeklipst. Der Kunststoffträger kann zudem in dem Träger ebenfalls eingesetzt und verrastet bzw. eingeklipst werden. Damit wird eine vorteilhaft einfache Montage ermöglicht.

Hierbei kann die erste Mahlscheibe in einer Ausführung in den Träger des ersten Mahlscheibenträgers dergestalt vorteilhaft eingesetzt sein, dass die Nasen jeweils in einer Nut axial verschiebbar geführt und axial gesichert aufgenommen sind.

Dies ist zudem vorteilhaft, da auf diese Weise ein axialer Freiheitsgrad für die erste Mahlscheibe für eine Kraftsteuerung gebildet wird.

In einer anderen Ausführung sind an dem Außenumfang des Ringabschnitts des Trägers des zweiten Mahlscheibenträgers regelmäßig verteilt laschenartige Vorsprünge angeordnet, die von dem Ringabschnitt des Trägers des zweiten Mahlscheibenträgers hervorstehen, wobei die laschenartigen Vorsprünge jeweils eine eingeformte Ausnehmung aufweisen, welche mit einer jeweiligen Nase der zweiten Mahlscheibe in Eingriff steht.

Auf diese Weise können die Nasen im unteren, d.h. in dem Träger des zweiten Mahlscheibenträgers idealerweise hinter den Auswerfergeometrien, die hier durch die laschenartigen Vorsprünge gebildet sind, in die Ausnehmungen eingelassen werden. So können die Nasen auch als Führung beim Einsetzen der Mahlscheibe dienen.

Das Mahlwerk kann als Scheiben- oder Walzen- oder Kegelmahlwerk ausgeführt sein. Die Verstellvorrichtung weist somit einen vorteilhaft großen Einsatzbereich auf.

In weiterer Ausführung sind die zentrischen Innenkonturen der Mahlscheiben, der Konturvorsprung des Trägers des ersten Mahlscheibenträgers und die zentrische Kontur des Trägers des zweiten Mahlscheibenträgers als Mehrkant, bevorzugt Sechskant, Dreikant, Vierkant, Oval, Ellipse u.dgl. ausgebildet sind, wobei die zentrische Innenkontur der ersten Mahlscheibe und der Konturvorsprung des Trägers des ersten Mahlscheibenträgers miteinander korrespondieren, und wobei die zentrische Innenkontur der zweiten Mahlscheibe und die zentrische Kontur des Trägers des zweiten Mahlscheibenträgers miteinander korrespondieren.

Die Konturen, z.B. als Sechskant, können bei der angetriebenen zweiten Mahlscheibe und ihrem Träger eine Presspassung aufweisen, wenn die zweite Mahlscheibe in den Kunststoffträger eingesetzt wird, für den Fall, wenn der Betreiber die zweite Mahlscheibe nicht mehr aus dem Mahlwerk entnehmen will. Falls es aus Wartungsgründen gewünscht ist, die zweite Mahlscheibe zu demontieren, wird der Formschluss (z.B. Sechskant) als Spielpassung ausgelegt. Da sich die Mahlscheiben beim Mahlprozess auseinanderdrücken, wird keine weitere axiale Sicherung der zweiten Mahlscheibe benötigt. Somit wird die zweite Mahlscheibe vorteilhaft einfach in den Träger eingelegt, was eine sehr montage- und wartungsfreundliche Lösung darstellt.

Für eine Verwendung von nur einem Mahlscheibentyp in einem Mahlwerk mit zwei Mahlscheiben kann die Mahlscheibe radial hervorstehende Nasen aufweisen, die an den Außenumfängen der Mahlscheibe regelmäßig verteilt angeformt sind. So dienen diese Nasen einerseits nur zur Führung beim Einsetzen der zweiten Mahlscheibe in den Träger des zweiten Mahlscheibenträgers und andererseits für eine axiale Führung und einen axialen Anschlag der ersten Mahlscheibe in dem Träger des ersten Mahlscheibenträgers.

Weitere vorteilhafte Ausgestaltungen sind den übrigen Unteransprüchen zu entnehmen.

Nachfolgend wird die Erfindung anhand eines Ausführungsbeispiels unter Bezug auf die Zeichnungen näher beschrieben. Die Figuren dienen nur zur näheren Erläuterung der Erfindung und sind nicht beschränkend für die Erfindung. Einzelne beschriebene Merkmale können im Rahmen des allgemeinen Fachwissens auch für sich genommen in weitere Ausführungsvarianten übertragen werden. Es zeigen:
- Figur 1:: eine schematische Vorderansicht im Schnitt eines Prinzips eines erfindungsgemäßen Mahlwerks zum Mahlen von Kaffeebohnen;
- Figur 2:: eine schematische Explosionsdarstellung eines Ausführungsbeispiels des erfindungsgemäßen Mahlwerks nach Figur 1;
- Figur 3-4:: schematische Darstellungen einer Antriebseinheit des erfindungsgemäßen Mahlwerks nach Figur 2 mit einer Mahlscheibe;
- Figur 5-6:: schematische Explosionsdarstellungen eines Mahlscheibenträgers mit einer Mahlscheibe des erfindungsgemäßen Mahlwerks nach Figur 2;
- Figur 7-9:: schematische Darstellungen einer Mahlscheibe des erfindungsgemäßen Mahlwerks nach Figur 2; und
- Figur 10-11:: schematische Schnittdarstellungen der Mahlscheibe nach Figur 7-9; und
- Figur 12-14: schematische Schnittdarstellungen der Mahlscheibe nach Figur 7-9 in verschiedenen Hubstellungen.

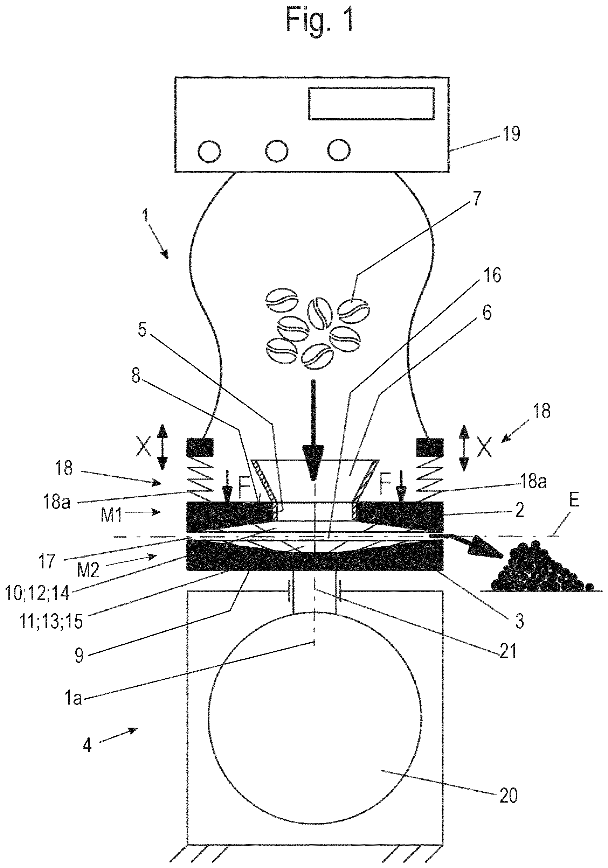

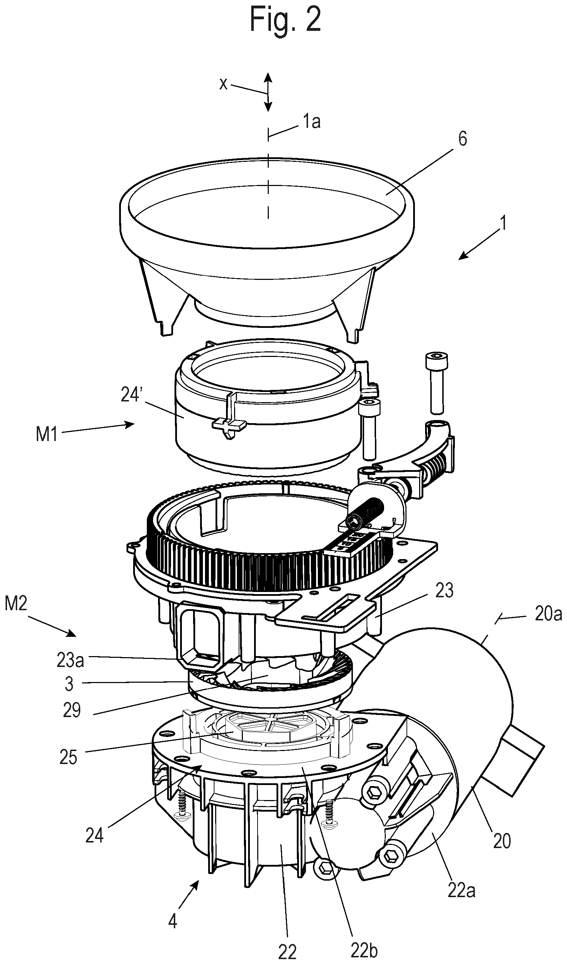

In Fig. 1 ist eine schematische Vorderansicht im Schnitt eines Prinzips eines erfindungsgemäßen Mahlwerks 1 zum Mahlen von Kaffeebohnen 5 dargestellt. Fig. 2 zeigt eine schematische Explosionsdarstellung eines Ausführungsbeispiels des erfindungsgemäßen Mahlwerks 1 nach Figur 1.

Das Mahlwerk 1 weist eine Mahlwerksachse 1a, einen ersten Mahlscheibenträger M1 mit einem ersten Mahlscheibe 2, einen zweiten Mahlscheibenträger M2 mit einem zweiten Mahlscheibe 3 und eine Antriebseinheit 4 auf. Die Mahlscheibe 2, 3 sind hier als so genannte Mahlscheiben ausgebildet. Die erste Mahlscheibe 2 ist in dem ersten Mahlscheibenträger M1 drehfest gelagert. Insofern steht die erste Mahlscheibe 2 während des Betriebs des Mahlwerks 1 still.

Die erste Mahlscheibe 2 weist eine zylindrische Hüllgeometrie sowie einen zentrischen Durchbruch 5 auf. Die erste Mahlscheibe 2 kann auch anders, z.B. als Mahlkegel ausgeführt sein. Der Durchbruch 5 ist hier durch einen Einfülltrichter 6 durchgriffen. Durch den Einfülltrichter 6 und den Durchbruch 5 werden dem Mahlwerk 1 zu mahlende Kaffeebohnen 7 zugeführt. Das Mahlwerk 1 kann auch zum Mahlen anderer Genuss- oder Lebensmittel vorgesehen sein, bevorzugt ist es jedoch zum Mahlen von Kaffeebohnen 7 vorgesehen. Der Einfülltrichter 6 ist vorteilhaft derart gestaltet, dass eine unerwünschte Brückenbildung der Kaffeebohnen 7 im Einfülltrichter 6 verhindert ist.

Jedes Mahlscheibe 2, 3 weist jeweils eine Rückseite 8, 9 und eine Mahlseite 10, 11. Die Rückseite 8 des ersten Mahlscheibes 2 ist dem Einfülltrichter 6 zugewandt. Die zweite Mahlscheibe 3 ist mit seiner Rückseite 9 mit der Antriebseinheit 4 gekoppelt. Dies ist unten noch näher erläutert.

Die Mahlseiten 10, 11 sind jeweils mit einer hier konkaven bzw. kegelförmigen Einsenkung 12, 13 und mit wenigstens einer Mahlschneide 14, 15 versehen.

Die Mahlscheibe 2, 3 sind mit ihren Mahlseiten 10, 11 zueinander gewandt angeordnet. Dabei ist die zweite Mahlscheibe 3 des zweiten Mahlscheibenträgers M2 koaxial zu der Mahlwerksachse 1a und zu der ersten Mahlscheibe 2 sowie unterhalb des ersten Mahlscheibes 2 angeordnet. Der Begriff "unterhalb" bezieht sich auf die Zeichenebene der Fig. 1. Die zweite Mahlscheibe 3 läuft während des Betriebs der Mahlwerks 1 um. Dies wird unten noch weiter beschrieben.

Die kegelförmige Einsenkung 12 der ersten Mahlscheibe 2 und die kegelförmige Einsenkung 13 der zweiten Mahlscheibe 3 bilden somit eine Art doppelkegelförmige Mahlkammer 16, die an ihrem Außenumfang in einem Mahlspalt 17 ausmündet. An dem Mahlspalt 17 kann sich eine Auffangvorrichtung (hier nicht dargestellt) anschlie-ßen, die das aus dem Mahlspalt 17 austretende Kaffeebohnen -vorzugsweise Kaffeepulver- auffängt und einem Extraktionsprozess zuführt.

Die zweite Mahlscheibe 3 weist ebenfalls eine zylindrische Hüllgeometrie auf. Die zweite Mahlscheibe 3 kann auch anders, z.B. als Mahlkegel ausgeführt sein. Die zweite Mahlscheibe 3 ist relativ zu der ersten Mahlscheibe 2 um die Mahlwerksachse 1a drehbar. Hier ist die zweite Mahlscheibe 3 mit der Antriebseinheit 4 so gekoppelt, dass die zweite Mahlscheibe 3 im Betrieb des Mahlwerks1 in eine Drehbewegung versetzt wird, während die erste Mahlscheibe 2 still steht.

Dies ist vorteilhaft, aber nicht zwingend. Alternativ kann auch die erste Mahlscheibe 2 drehbar sein, während die zweite Mahlscheibe 3 still steht. Es ist auch möglich, dass beide Mahlscheiben 2, 3 drehbar sind -z.B. in gegenläufiger Drehrichtung und/oder mit unterschiedlichen Geschwindigkeiten, so dass stets eine Relativbewegung zwischen beiden Mahlscheiben 2, 3 stattfindet.

Das Mahlwerk 1 weist weiterhin wenigstens eine Krafterzeugungseinrichtung 18 auf. Die Krafterzeugungseinrichtung 18 wirkt hier auf die erste Mahlscheibe 2. Dadurch wirkt eine jeweilige Kraft F stetig auf zwischen der ersten Mahlscheibe 2 und der zweiten Mahlscheibe 3 befindliche Kaffeebohnen. Dies ist vorteilhaft, jedoch nicht zwingend. Die Krafterzeugungseinrichtung 18 kann auch auf die zweite drehbare Mahlscheibe 3 oder auf beide Mahlscheibe 2, 3 wirken.

Die Krafterzeugungseinrichtung 18 umfasst hier zwei Druckfedern 18a, die durch eine entsprechende, hier nicht bezeichnete und nicht weiter behandelte Vorrichtung, beispielsweise durch einen Stellmotor, um einen veränderbaren Vorspannweg X vorgespannt werden können, so dass die jeweilige Kraft F, die auf die erste Mahlscheibe 2 und damit auf die Kaffeebohnen wirkt, in ihrem Betrag veränderlich bzw. einstellbar ist. Die Druckfedern 18a üben eine auf diese Weise einstellbare bzw. veränderbare Axialkraft senkrecht zu einer Ebene E des Mahlspaltes 17 auf die erste und/oder zweite Mahlscheibe 2, 3 aus.

Ferner kann die auf die Kaffeebohnen durch das Mahlwerk 1 wirkende Kraft abhängig von den zu mahlenden Kaffeebohnen 7 und dem jeweiligen gewünschten Mahlgrad vorteilhaft durch die Krafterzeugungseinrichtung 18 eingestellt werden. Vorzugsweise sind hierfür Datensätze hinsichtlich des jeweiligen Mahlgrades, des Bohnentyps und der zu erzeugenden Kraft durch die Krafterzeugungseinrichtung 18 auf einem Datenspeicher einer Steuer- und/oder Auswerteeinheit 19 zur Steuerung einer Kaffeemaschine und insbesondere des Mahlwerks 1 hinterlegt. Die vorgenannte Steuer- und/oder Auswerteeinheit 19 kann dem Mahlwerk 1 zugeordnet oder Teil einer Kaffeemaschine z.B. eines Kaffeevollautomaten sein.

Die zweite Mahlscheibe 3 wird hier von einem Antriebsmotor 20 der Antriebseinheit 4 über eine Antriebswelle 21, die in Fig. 1 nur angedeutet ist, angetrieben.

Alternativ ist auch ein wellenloser Direktantrieb möglich, bei dem eine der Mahlscheibe 2, 3 der Läufer des Antriebsmotors 10 ist oder ein indirekter Antrieb, bei dem der Antriebsmotor 10 über ein Getriebe auf eines der Mahlscheibe 2, 8 wirkt.

Wie in Fig. 2 gezeigt ist, umfasst der erste Mahlscheibenträger M1 die erste Mahlscheibe 2, den Einfülltrichter 6, und einen Träger 24'. Der erste Mahlscheibenträger M1 wird auch oberer Mahlscheibenträger M1 genannt.

Der erste Mahlscheibenträger M1 mit der ersten Mahlscheibe 2 ist im zusammengebauten Zustand in einem Mahlgehäuse 23 zusammen mit der zweiten Mahlscheibe 3 in der Weise angeordnet, wie in Fig. 1 schematisch angedeutet ist.

Das Mahlgehäuse 25 ist koaxial zu der Mahlwerksachse 1a angeordnet und weist in einem nicht bezeichneten Bodenabschnitt einen Auswurfabschnitt 23a auf, der radial nach außen geöffnet ist. Das Mahlgehäuse 25 wird nicht weiter beschrieben.

In Fig. 2 ist zudem ein nicht bezeichneter Mahlgradindikator angegeben, der mit einer ebenfalls nicht gezeigten Verstellvorrichtung der Krafterzeugungseinrichtung 18 in Zusammenwirkung steht. Der Mahlgradindikator wird hier nicht weiter beschrieben.

Der zweite Mahlscheibenträger M2 wird auch als unterer Mahlscheibenträger M2 bezeichnet und umfasst die zweite Mahlscheibe 3 und einen Träger 24.

Die zweite Mahlscheibe 3 ist auf den Träger 24 aufgesetzt und steht mit diesem drehfest in Verbindung. Dazu steht eine Kontur 25 des Trägers 24 mit einer Innenkontur 29 des zweiten Mahlscheibes 3 in Eingriff. Dies wird unten noch weiter beschrieben.

Der Träger 24 ist mit der Antriebswelle 21, die in einem Innenraum eines Gehäuses eines Getriebes 22 der Antriebseinheit 4 angeordnet ist, verbunden. Dies ist nicht gezeigt, aber leicht vorstellbar. Der Antriebsmotor 20 mit einer Antriebsmotorachse 20a ist in diesem Beispiel über einen Anschraubflansch 22a des Gehäuses des Getriebes 22 an diesem befestigt.

Das Mahlgehäuse 23 wird auf einem, hier nach oben zu den Mahlscheibenträgern M2, M1 weisenden Flansch 22b des Gehäuses des Getriebes 22 über Befestigungselemente, z.B. Schrauben, befestigt. Dabei umgibt der Bodenabschnitt des Mahlgehäuses 23 die zweite Mahlscheibe 3, wobei die erste Mahlscheibe 2 dann im zusammengebauten Zustand in einem oberen Abschnitt des Mahlgehäuses 23 angeordnet ist.

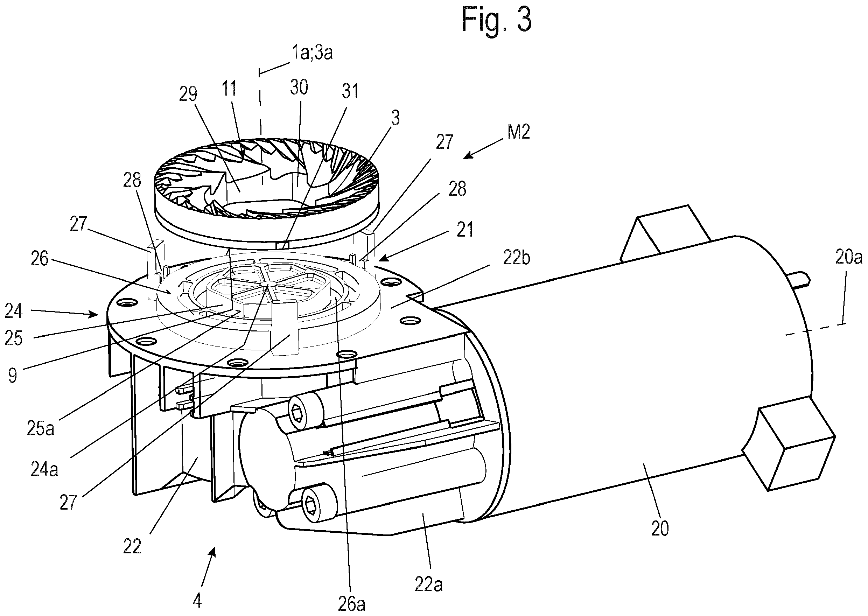

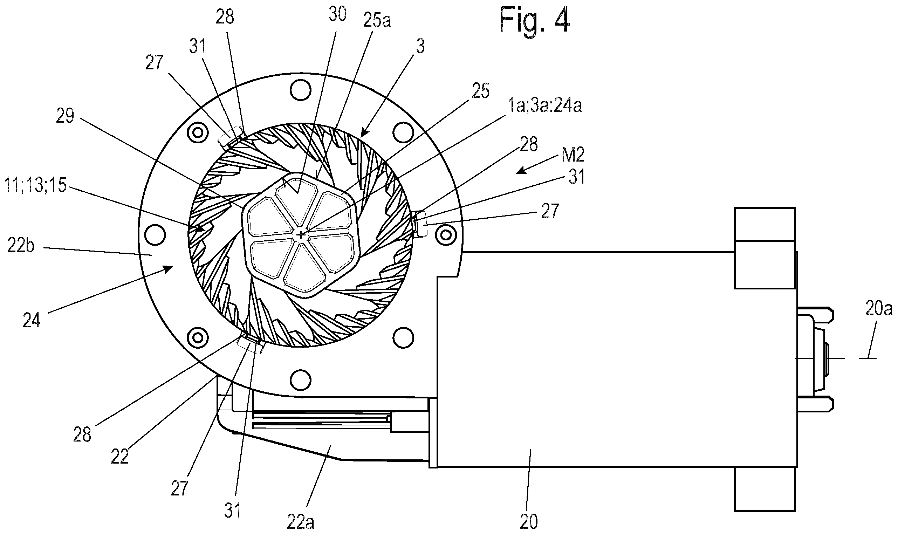

Fig. 3 zeigt eine schematische Perspektivdarstellung der Antriebseinheit 4 des erfindungsgemäßen Mahlwerks 1 nach Figur 2 mit der noch nicht aufgesetzten zweiten Mahlscheibe 3. In Fig. 4 ist eine schematische Draufsicht auf die Antriebseinheit 4 in Richtung der Mahlwerksachse 1a gezeigt.

Die Antriebseinheit 4 weist z.B. ein Schneckengetriebe zwischen Antriebswelle 21 und Antriebsmotor 20 auf. Die Antriebswelle 21 ist an ihrem oberen Ende mit dem Träger 24, der sich mit ihr um die Mahlwerksachse 1a dreht, verbunden. Der Träger 24 kann auch einstückig mit der Antriebswelle 21 ausgeführt sein.

Der Träger 24 ist auf seiner Oberseite, die zu dem Mahlgehäuse 23 weist, mit einer Mitnehmer- und Auswerfergeometrie des Mahlwerks 1 versehen. Der Träger 24 umfasst die Kontur 25, einen Ringabschnitt 26 und laschenartige Vorsprünge 27.

Die Kontur 25 ist hier als eine zentrale Außenkontur in einer Sechskantform mit nach außen liegenden Konturflächen 25a um die Mitte des Trägers 14, durch welche die Mahlwerksachse 1a verläuft, ausgebildet.

Der Ringabschnitt 26 ist koaxial zu der Kontur 25 und der Mahlwerksachse 1a angeordnet und umgibt die Kontur 25, wobei zwischen der Kontur 25 und dem Ringabschnitt 26 ein ringförmiger Freiraum 26a festgelegt ist.

An dem Außenumfang des Ringabschnitts 26 sind regelmäßig verteilt die laschenartigen Vorsprünge 27 angeordnet (hier drei Vorsprünge 27), die von dem Ringabschnitt 26 des Trägers 24 hervorstehen.

In den Übergangsbereichen zwischen den Vorsprüngen 27 und dem Außendurchmesser des Ringabschnitts 26 sind in die Vorsprünge 27 jeweilige Ausnehmungen 28 eingeformt, welche nach oben offen sind.

Die zweite Mahlscheibe 3 weist wie die erste Mahlscheibe 2 einen zentrischen Durchbruch auf, der hier als Innenkontur 29 bezeichnet und mit Konturflächen 30 ausgebildet ist. Die Innenkontur 29 der zweiten Mahlscheibe 3 korrespondiert mit der Außenkontur 25 des Trägers 24 der Antriebseinheit 4.

An dem Außenumfang der zweiten Mahlscheibe 3 sind am Rand zu der Rückseite 9 radial hervorstehende Nasen 31 regelmäßig verteilt angeformt. Hier sind es drei Nasen 31.

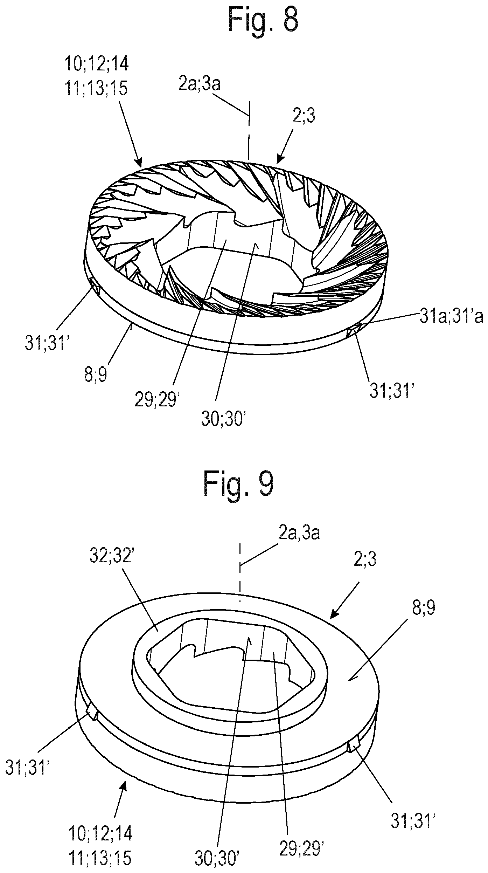

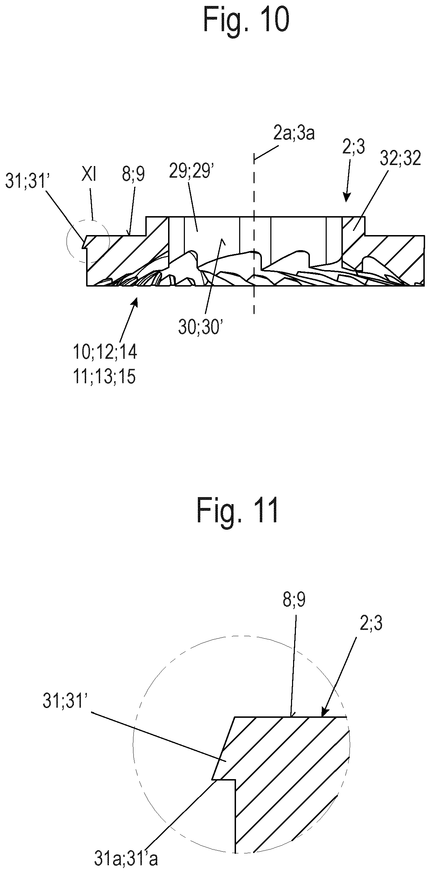

Im zusammengebauten Zustand ist die zweite Mahlscheibe 3 auf den Träger 24 derart aufgesetzt, dass die Innenkontur 29 der Mahlscheibe 3 mit der Außenkontur 25 des Trägers 24 in Eingriff steht, wobei eine Mahlscheibenachse 3a der zweiten Mahlscheibe 3 koaxial zu einer Trägerachse 24a des Trägers 24 und koaxial zu der Mahlwerksachse 1a verläuft. Weiterhin liegt die Rückseite 9 der zweiten Mahlscheibe 3 auf dem Ringabschnitt 26 des Trägers 24 auf, wobei ein Ringvorsprung 32 (siehe Fig. 9, 10) der zweiten Mahlscheibe 3 in den Freiraum 26a hineinragt bzw. in diesem aufgenommen ist. Der Ringvorsprung 32 steht von der Rückseite 9 der zweiten Mahlscheibe 3 hervor, wie am besten in Fig. 9 und 10 zu erkennen ist. Dabei sind die Nasen 31 in den Ausnehmungen 28 der Vorsprünge 27 aufgenommen.

Die Kontur 25 des Trägers 24 und die Innenkontur 29 der zweiten Mahlscheibe 3 bilden zur Übertragung des Mahlscheibenmoments einen vorteilhaften Formschluss zwischen zweiter Mahlscheibe 3 und Träger 24, der große Kräfte überträgt und gleichzeitig keine störenden Öffnungen verursacht, in denen sich Kaffeemehl absetzen kann. Dies ist in der Draufsicht in Fig. 4 deutlich zu erkennen.

Eine besonders elegante Möglichkeit ist der Formschluss am inneren Durchgangsbereich der zweiten Mahlscheibe 3, welcher in der Regel als einfaches Durchgangsloch oder Durchbruch ausgebildet ist und wo an dieser Stelle noch kein fein gemahlenes Kaffeemehl vorhanden ist. Das Durchgangsloch ist jedoch als formschlüssige Innenkontur 29, hier beispielsweise als Sechskant, ausgeführt. Natürlich sind andere geometrische Formen wie z.B. Vierkant, Mehrkant, Oval, Ellipse u.dgl. auch möglich. So können besonders große Momente übertragen werden und es entstehen keine störenden Geometrien am Außendurchmesser der zweiten Mahlscheibe 3.

Die am Umfang der zweiten Mahlscheibe 3 angeformten Nasen 31 sind als konturintegrierte, so genannte Schnappnasen ausgebildet. Da das Moment für die Mahlscheibe, hier die zweite Mahlscheibe 3, über den Formschluss der Kontur 25 des Trägers 24 und der Innenkontur 29 am inneren Durchgang der zweiten Mahlscheibe 3 übertragen wird, können die Nasen 31 sehr filigran ausgeführt werden, da sie kein Drehmoment übertragen.

Die Nasen 31 werden im unteren Mahlscheibenträger M2 in dem Träger 24 idealerweise hinter den Auswerfergeometrien eingelassen, d.h. in den Ausnehmungen 28 an den Vorsprüngen 27. Da beide Mahlscheiben 2, 3 identisch ausgebildet sind, dienen die Nasen 31 für die zweite Mahlscheibe 3 hier nur zur Führung. Die Funktion der Nasen 31 bei der ersten Mahlscheibe 2 wird unten erläutert.

Die Kontur 25 des Trägers 24 und die Innenkontur 29 der zweiten Mahlscheibe 3 können eine Passung bilden. Wenn die zweite Mahlscheibe 3 durch einen Betreiber einer Kaffeemaschine, welcher das Mahlwerk 1 mit der zweiten Mahlscheibe 3 zugeordnet ist, nicht mehr aus dem Mahlwerk 1 entnommen werden soll, kann diese Passung als eine Presspassung ausgebildet sein.

Falls es aus Wartungsgründen gewünscht ist, die zweite Mahlscheibe 3 zu demontieren, wird der Formschluss der Konturen 25, 29 (z.B. Sechskant) als Spielpassung ausgelegt. Da sich die erste Mahlscheibe 2 und die zweite Mahlscheibe 3 beim Mahlprozess auseinanderdrücken, wird keine weitere axiale Sicherung der unteren, d.h. der zweiten Mahlscheibe 3 benötigt. Somit wird die zweite Mahlscheibe 3 lediglich in den Träger 24 eingelegt, was eine sehr montage- und wartungsfreundliche Lösung darstellt.

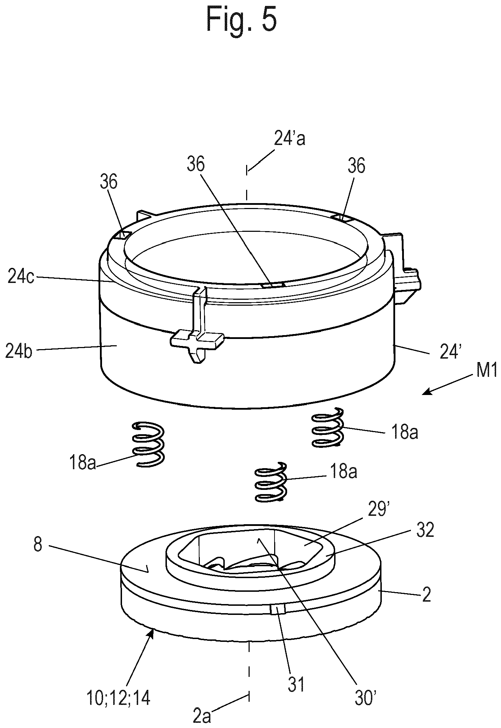

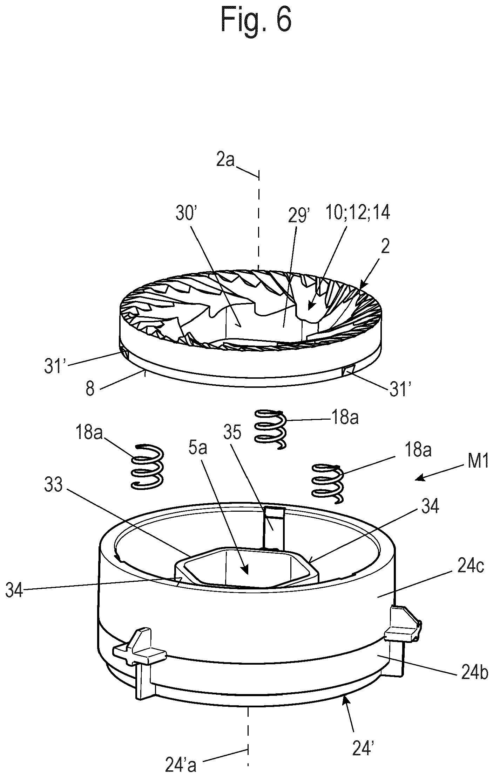

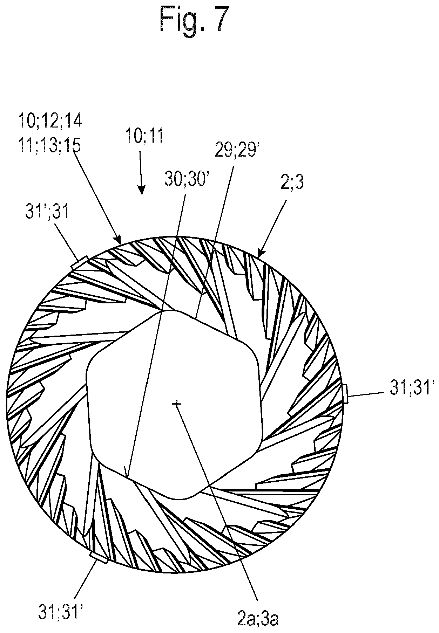

Fig. 5 zeigt eine schematische Explosionsdarstellung des ersten Mahlscheibenträgers M1 mit der ersten Mahlscheibe 2 des erfindungsgemäßen Mahlwerks 1 nach Figur 2. In Fig. 6 ist die Ansicht nach Fig. 5 um 180° um eine senkrecht auf der Zeichnung stehende Achse gedreht dargestellt. Fig. 7 zeigt eine schematische Draufsicht auf die Mahlseite 10, 11 der Mahlscheibe 2, 3. In Fig. 8 ist eine schematische Perspektivansicht der Mahlseite 10, 11 der Mahlscheibe 2, 3 dargestellt; eine schematische Perspektivansicht der Rückseite 8, 9 der Mahlscheibe 2, 3 zeigt Fig. 9. Fig. 10 stellt eine schematische Schnittansicht der Mahlscheibe 2, 3 dar, und Fig. 11 zeigt einen vergrößerten Ausschnitt XI der Fig. 10 mit einer Nase 31, 31'.

Der obere bzw. erste Mahlscheibenträger M1 umfasst die erste Mahlscheibe 2 mit ihrer Mahlscheibenachse 2a, Druckfedern 18a und den Träger 24' mit seiner Trägerachse 24'a.

In diesem Ausführungsbeispiel ist die erste Mahlscheibe 2 in gleicher Weise wie die zweite Mahlscheibe 3 ausgestaltet, d.h. beide Mahlscheiben 2, 3 sind identisch. Zur Unterscheidung von der zweiten Mahlscheibenträger M2 und der zweiten Mahlscheibe 3 sind der Träger 24' des ersten Mahlscheibenträgers M1, die Innenkontur 29', die Konturflächen 30' und die Nasen 31' der ersten Mahlscheibe 2 mit einem Apostroph versehen.

Die erste Mahlscheibe 2 weist wie die zweite Mahlscheibe 3 einen zentrischen Durchbruch auf, der hier als Innenkontur 29' bezeichnet und mit Konturflächen 30' ausgebildet ist.

Die mit den Druckfedern 18a angefederte erste Mahlscheibe 2 ist in den Träger 24' eingesetzt, in dem Träger 24' geführt und in nicht gezeigter Weise verspannt. Dabei verlaufen die Mahlscheibenachse 2a der ersten Mahlscheibe 2 und die Trägerachse 24'a des Trägers 24' koaxial und im zusammengebauten Zustand des Mahlwerks 1 koaxial mit der Mahlwerksachse 1a.

Die erste Mahlscheibe 2 ist hier inklusive der Druckfedern 18a für die Kraftsteuerung bleibend in einen Trägereinsatz 24c, z.B. Kunststoffträger, eingesetzt, z.B. eingeklipst. Der Trägereinsatz 24c ist in einer Trägerbasis 24b des Trägers 24' in nicht näher gezeigter Weise eingesetzt und mit diesem verbunden, z.B. über eine Rast- /Klipsverbindung. Der Träger 24' ist hier mit der Trägerbasis 24b und dem Trägereinsatz 24c als ein mehrteiliges Bauteil ausgebildet. Der Träger 24' kann aber auch mit der Trägerbasis 24b und dem Trägereinsatz 24c einstückig sein.

Wie in Fig. 6 dargestellt ist, weist der Träger 24' in seinem Innenraum einen hervorstehenden Konturvorsprung 33 mit äußeren Konturflächen 34 auf. Der Konturvorsprung 33 korrespondiert mit der Innenkontur 24' der ersten Mahlscheibe 2. Im Gegensatz zu der Kontur 25 des zweiten Mahlscheibenträgers M2 ist der Konturvorsprung 33 des ersten Mahlscheibenträgers M1 mit einem zentrischen Durchbruch 5a versehen. Dieser Durchbruch 5a verlängert bzw. ergänzt den oben beschriebenen zentrischen Durchbruch 5, um den Kaffeebohnen 7 aus dem Einfülltrichter 6 einen Zugang zu der Mahlkammer 16 zwischen den Mahlscheiben 2, 3 zu ermöglichen.

Die am Umfang der ersten Mahlscheibe 2 vorteilhaft angeformten konturintegrierten Nasen 31' ("Schnappnasen") sorgen hier bei der ersten Mahlscheibe 2 für eine axiale Sicherung der ersten Mahlscheibe 2 in dem Träger 24' des ersten Mahlscheibenträgers M1. Die erste Mahlscheibe 2 ist in den Trägereinsatz 24c, z.B. Kunststoffträger, dergestalt eingeklipst, dass die Nasen 31' jeweils in einer Nut 35 des Trägereinsatzes 24c verschiebbar geführt aufgenommen sind. Die Nuten 35 verlaufen parallel zu der Trägerachse 24'a des Trägers 24 und weisen an ihren unteren Enden jeweils einen Vorsprung 36 auf, der einen axialen Anschlag für eine Anschlagfläche 31'a der jeweiligen in der zugehörigen Nut 35 geführten Nase 31' bildet. Auf diese Weise ist die erste Mahlscheibe 2 in dem Trägereinsatz 24c des Trägers 24 axial gesichert.

Die Druckfedern 18a befinden sich dabei zwischen der Rückseite 8 der ersten Mahlscheibe 2 und stützen sich in nicht gezeigter, aber leicht vorstellbarer Weise an zugehörigen Stützabschnitten der Trägerbasis 24b des Trägers 24' ab. Die Druckfedern 18a sind symmetrisch um die Mahlscheibenachse 2a und um die Mahlwerksachse 1a angeordnet, um eine optimal-verteilte Kraftbeaufschlagung zu erreichen. Es können aber auch mehr als die drei gezeigten Druckfedern 18a vorgesehen sein.

Als Druckfeder 18a für die vorliegende Anwendung ist eine Schraubenfeder bevorzugt. Es sind aber auch Federn oder Federpakete anderer Bauart einsetzbar

Die erste Mahlscheibe 2 weist so einen axialen Freiheitsgrad in Richtung ihrer Mahlscheibenachse 2a, d.h. in Richtung der Trägerachse 24'a und der Mahlwerksachse 1a des Mahlwerks 1 auf. Dies wird unten weiter noch näher erläutert.

Da ein Werkzeugmoment, d.h. ein Haltemoment, über den Formschluss des Konturvorsprungs 33 des Trägers 24' und der Innenkontur 29' am inneren Durchgang der ersten Mahlscheibe 2 übertragen wird, kann die Schnappgeometrie (Nasen 31' und Vorsprünge 36) sehr filigran ausgeführt werden. Aufgrund dieser konstruktiven Ausführung ist es möglich, die untere und obere Mahlscheibe 2, 3 als Gleichteil zu gestalten.

In Fig. 7-9 ist die Gestaltung der Innenkontur 29, 29' mit den Konturflächen 30, 30' als Sechskant mit abgerundeten Ecken dargestellt. Anderen formschlüssige Konturen sind natürlich möglich, wie z.B. Vierkant, Mehrkant, Oval, Ellipse usw. Zusammen mit der Kontur 25 des Trägers 24 des zweiten Mahlscheibenträgers M2 ist die Innenkontur 30 der zweiten Mahlscheibe 3 im eingesetzten Zustand derart dicht verschlossen (siehe Fig. 4), dass sich in diesem Bereich kein Kaffeemehl ablagern kann und eine einfache Säuberung möglich ist.

Die Innenkontur 29, 29' ist durchgehend in die Mahlscheibe 2, 3 eingeformt, auch durch den Ringvorsprung 32, 32' hindurch, wie in Fig. 9 deutlich zu erkennen ist.

Die Nasen 31, 31' stehen am äußeren Umfang der Mahlscheibe 2, 3 am Rand der Rückseite 8, 9 radial hervor. Die Nasen 31, 31' verbreitern sich von der Rückseite 8, 9 bis zu einer Anschlagfläche 31a, 31'a in einer axialen Richtung bezogen auf die Mahlscheibenachse 2a, 3a. Dies ist in Fig. 11 vergrößert dargestellt.

In Fig. 10 ist zu erkennen, dass die Einsenkung 12, 13 mit den Mahlschneiden 14, 15 auf der Mahlseite 10, 11 eine konkave Hüllkurve bilden.

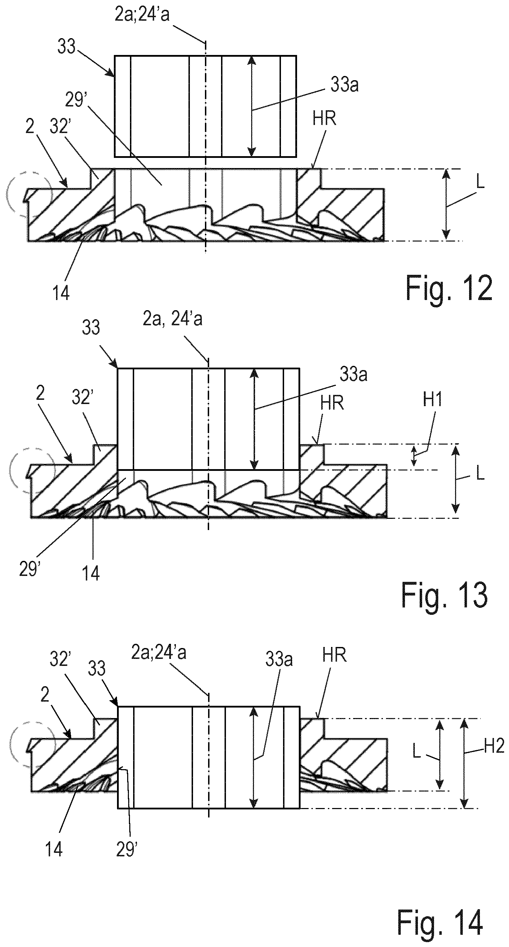

Fig. 12-14 zeigen schematische Schnittdarstellungen der ersten Mahlscheibe 2 nach Figur 7-9 in verschiedenen Hubstellungen in Relation zu dem zugehörigen Konturvorsprung 33 des ersten Mahlscheibenträgers M1.

In Fig. 12 ist die Mahlscheibe 2 nicht auf den Konturvorsprung 33 aufgeschoben. Die erste Mahlscheibe 2 weist eine Axiallänge L in Richtung der Mahlscheibenachse 2a, d.h. in Richtung der Trägerachse 24'a auf. Eine Länge 33a des Konturvorsprungs 33 in Richtung der Trägerachse 24'a ist hier größer als die Axiallänge L der ersten Mahlscheibe 2.

Die Fläche des Ringvorsprungs 32' dient für die weiteren Betrachtungen als eine Hubreferenz HR.

In Fig. 13 ist die erste Mahlscheibe 2 mit ihrer Innenkontur 29' auf den Konturvorsprung 33a so weit in Richtung der Achsen 2a, 24'a aufgeschoben, dass sich ein relativer Hub H1 der Mahlscheibe 2 bezogen auf die Hubreferenz HR ergibt. Dieser relative Hub H1 ist in dem gezeigten Beispiel etwas größer als eine axiale Länge des Ringvorsprungs 32'. Die erste Mahlscheibe 2 weist somit einen axialen Freiheitsgrad in Richtung der Achsen 2a; 24'a auf.

Dieser axiale Freiheitsgrad der ersten Mahlscheibe 2 in Bezug auf den Konturvorsprung 33 ermöglicht es auch, dass ein relativer Hub H2 größer als die Axiallänge L der ersten Mahlscheibe 2 erreicht werden kann. Dies zeigt Fig. 14. Dabei ist die Innenkontur 29' der ersten Mahlscheibe 2 vollständig auf den Konturvorsprung 33a aufgeschoben und der Konturvorsprung 33a steht durch die Innenkontur 29' im aus dem Bereich der Mahlschneiden 14 hervor. Diese Stellung kann auch zur Reinigung der Einsenkung 13 in den Mahlschneiden 14 benutzt werden.

Eine Begrenzung des Hubs der ersten Mahlscheibe 2 in Bezug auf den Konturvorsprung 33 kann z.B. durch einen Anschlag der ersten Mahlscheibe 2 mit der Hubreferenz HR an einem nicht gezeigten Anschlag in dem Träger 24 realisiert werden.

Das Moment für die Mahlscheibe 2, 3, hier die zweite Mahlscheibe 3, wird über den Formschluss der Kontur 25 des Trägers 24 und der Innenkontur 29, 29' am inneren Durchgang der Mahlscheibe 2, 3 übertragen. Dieser Formschluss ist ein zentrischer Formschluss als durchgehende Wellen-Naben-Verbindung zur unmittelbaren Drehmomentübertragung vom Antrieb direkt oder indirekt auf die Mahlscheibe 2, 3. Der zentrische Formschluss besteht dabei zwischen der Kontur 25 des Konturvorsprungs 33 des Trägers 24 und der Innenkontur 29, 29' der Mahlscheibe 2, 3.

Die Mahlscheiben 2, 3 sind einteilig ausgebildet. Der Formschluss erfolgt direkt über die geometrische Ausprägung der Innenkontur 29 der Mahlscheibe 3, z.B. wie oben schon beschrieben als Sechskantkontur. Eine solche Sechskantkontur ist glattwandig und weist keine Nuten auf. Zusatz- oder/und Zwischenbauteile, wie z.B. Passfedern u.dgl., sind daher nicht erforderlich. Dadurch sind die Stellen, an/in denen sich Kaffeemehl absetzen kann, erheblich minimiert.

Die Erfindung ist durch das oben angegebene Ausführungsbeispiel nicht eingeschränkt, sondern im Rahmen der Ansprüche modifizierbar.

Es ist z.B. denkbar, dass die erste Mahlscheibe 2 ohne Federn 18a in den ersten Mahlscheibenträger 24' eingesetzt ist.

### Bezugszeichen

- 1: Mahlwerk
- 1a: Mahlwerksachse
- 2, 3: Mahlscheibe
- 2a, 3a: Mahlscheibenachse
- 4: Antriebseinheit
- 5: Durchbruch
- 6: Einfülltrichter
- 7: Kaffeebohne
- 8, 9: Rückseite
- 10, 11: Mahlseite
- 12, 13: Einsenkung
- 14, 15: Mahlschneide
- 16: Mahlkammer
- 17: Mahlspalt
- 18: Krafterzeugungseinrichtung
- 18a: Druckfeder
- 19: Steuer- und/oder Auswerteeinheit
- 20: Antriebsmotor
- 20a: Antriebsmotorachse
- 21: Antriebswelle
- 22: Getriebe
- 22a: Motorflansch
- 22b: Flansch
- 23: Mahlgehäuse
- 23a: Auswurfabschnitt
- 24, 24': Träger
- 24a, 24'a: Trägerachse
- 24b: Trägerbasis
- 24c: Trägereinsatz
- 25: Kontur
- 25a: Konturfläche
- 26: Ringabschnitt
- 26a: Freiraum
- 27: Vorsprung
- 28: Einformung
- 29, 29': Innenkontur
- 30, 30': Konturfläche
- 31, 31': Nase
- 31a, 31'a: Anschlagfläche
- 32, 32': Ringvorsprung
- 33: Konturvorsprung
- 33a: Länge
- 34: Konturfläche
- 35: Nut
- 36: Vorsprung

- E: Ebene
- F: Kraft
- H1, H2: Hub
- HR: Hubreferenz
- L: Axiallänge
- M1, M2: Mahlscheibenträger
- X: Vorspannweg

## Patentansprüche

1. Mahlwerk (1) zum Mahlen von Kaffeebohnen (5), wobei das Mahlwerk (1) einen ersten Mahlscheibenträger (M1) mit einer ersten Mahlscheibe (2), einen zweiten Mahlscheibenträger (M2) mit einer zweiten Mahlscheibe (3) und eine Antriebseinheit (4), durch welche mindestens eine der beiden Mahlscheiben (2, 3) drehbar betrieben ist, aufweist, wobei zumindest diejenige Mahlscheibe (3) der beiden Mahlscheiben (2, 3), welche durch die Antriebseinheit (4) drehbar betrieben ist, mit der Antriebseinheit (4) direkt oder indirekt über einen zentrischen Formschluss gekoppelt ist, wobei dieser zentrische Formschluss als Wellen-Naben-Verbindung einer unmittelbaren Drehmomentübertragung von der Antriebseinheit (4) direkt oder indirekt auf die Mahlscheibe (2, 3) ausgebildet ist, **dadurch gekennzeichnet, dass** die erste Mahlscheibe (2) der beiden Mahlscheiben (2, 3) mit ihrer zentrischen Innenkontur (29') mit einem zentrischen Konturvorsprung (33) eines Trägers (24') des ersten Mahlscheibenträgers (M1) formschlüssig in Eingriff steht und der dieser zentrische Formschluss als durchgehende Welle-Nabe-Verbindung ausgebildet ist.

2. Mahlwerk (1) nach Anspruch 1, **dadurch gekennzeichnet, dass** zumindest eine der beiden Mahlscheiben (2, 3) oder beide Mahlscheiben (2, 3) einen Durchbruch mit einer zentrischen Innenkontur (29, 29') aufweisen.

3. Mahlwerk (1) nach Anspruch 2, **dadurch gekennzeichnet, dass** diejenige Mahlscheibe (3) der beiden Mahlscheiben (2, 3), welche durch die Antriebseinheit (4) drehbar betrieben ist, mit ihrem Durchbruch mit der zentrischen Innenkontur (29) mit einer zentrischen Kontur (25) eines Trägers (24) des zweiten Mahlscheibenträgers (M2) formschlüssig in Eingriff steht, wobei der Träger (24) mit einer Antriebswelle (21) der Antriebseinheit (4) verbunden ist.

4. Mahlwerk (1) nach Anspruch 3, **dadurch gekennzeichnet, dass** der Träger (24) des zweiten Mahlscheibenträgers (M2) einen Ringabschnitt (26) aufweist, welcher um die zentrische Kontur (25) herum angeordnet ist.

5. Mahlwerk (1) nach Anspruch 4, **dadurch gekennzeichnet, dass** der Träger (24) des zweiten Mahlscheibenträgers (M2) einen Freiraum (26a) aufweist, welcher von dem Ringabschnitt (26) und der zentrischen Kontur (25) festgelegt ist.

6. Mahlwerk (1) nach einem der vorgenannten Ansprüche, **dadurch gekennzeichnet, dass** der Konturvorsprung (33) des Trägers (24') des ersten Mahlscheibenträgers (M1) einen zentrischen Durchbruch (5a) aufweist.

7. Mahlwerk (1) nach einem der vorgenannten Ansprüche, **dadurch gekennzeichnet, dass** beide Mahlscheiben (2, 3) jeweils radial hervorstehende Nasen (31, 31') aufweisen, die an den Außenumfängen der beiden Mahlscheiben (2, 3) regelmäßig verteilt angeformt sind.

8. Mahlwerk (1) nach Anspruch 7, **dadurch gekennzeichnet, dass** die erste Mahlscheibe (2) der beiden Mahlscheiben (2, 3) in einen Träger (24') des ersten Mahlscheibenträgers (M1) eingesetzt und in dem Träger (24') axial geführt und mittels der Nasen (31') axial gesichert ist.

9. Mahlwerk (1) nach Anspruch 8, **dadurch gekennzeichnet, dass** die erste Mahlscheibe (2) der beiden Mahlscheiben (2, 3) in den Träger (24') des ersten Mahlscheibenträgers (M1) dergestalt eingesetzt, dass die Nasen (31') jeweils in einer Nut (35) axial verschiebbar geführt und axial gesichert aufgenommen sind.

10. Mahlwerk (1) nach einem der vorgenannten Ansprüche, **dadurch gek**ennzeichnet, dass an dem Außenumfang des Ringabschnitts (26) des Trägers (24) des zweiten Mahlscheibenträgers (M2) regelmäßig verteilt laschenartige Vorsprünge (27) angeordnet sind, die von dem Ringabschnitt (26) des Trägers (24) des zweiten Mahlscheibenträgers (M2) hervorstehen, wobei die laschenartigen Vorsprünge (27) jeweils eine eingeformte Ausnehmung (28) aufweisen, welche mit einer jeweiligen Nase (31) der zweiten Mahlscheibe (3) der beiden Mahlscheiben (2, 3), welche durch die Antriebseinheit (4) drehbar betrieben ist, in Eingriff steht.

11. Mahlwerk (1) nach einem der vorgenannten Ansprüche, **dadurch gekennzeichnet, dass** das Mahlwerk (1) als Scheibenmahlwerk ausgeführt ist.

12. Mahlwerk (1) nach einem der vorgenannten Ansprüche, **dadurch gekennzeichnet, dass** die zentrischen Innenkonturen (29, 29') der beiden Mahlscheiben (2, 3), der Konturvorsprung (33) des Trägers (24') des ersten Mahlscheibenträgers (M1) und die zentrische Kontur (25) des Trägers (24) des zweiten Mahlscheibenträgers (M2) als Mehrkant, bevorzugt Sechskant, Dreikant, Vierkant, Oval, Elipse u.dgl. ausgebildet sind, wobei die zentrische Innenkontur (29') der ersten Mahlscheibe (2) der beiden Mahlscheiben (2, 3) und der Konturvorsprung (33) des Trägers (24') des ersten Mahlscheibenträgers (M1) miteinander korrespondieren, und wobei die zentrische Innenkontur (29) der zweiten Mahlscheibe (3) der beiden Mahlscheiben (2, 3), welche durch die Antriebseinheit (4) drehbar betrieben ist, und die zentrische Kontur (25) des Trägers (24) des zweiten Mahlscheibenträgers (M2) miteinander korrespondieren.

13. Mahlwerk (1) nach einem der vorgenannten Ansprüche, **dadurch gekennzeichnet, dass** die beiden Mahlscheiben (2, 3) identisch ausgebildet sind.

14. Mahlscheiben (2, 3) für ein Mahlwerk (1) nach einem der vorgenannten Ansprüche, wobei beide Mahlscheiben (2, 3) jeweils einen Durchbruch mit einer zentrischen Innenkontur (29, 29') aufweisen, **dadurch gekennzeichnet, dass** beide Mahlscheiben (2, 3) jeweils radial hervorstehende Nasen (31, 31') aufweisen, die an den Außenumfängen beider Mahlscheiben (2, 3) jeweils regelmäßig verteilt angeformt sind.

15. Kaffeemaschine, insbesondere Kaffeevollautomat mit wenigstens einem Mahlwerk (1) nach einem der Ansprüche 1 bis 13.

## Claims

1. Grinder (1) for grinding coffee beans (5), wherein the grinder (1) comprises a first grinding disk carrier (M1) having a first grinding disk (2), a second grinding disk carrier (M2) having a second grinding disk (3) and a drive unit (4), by means of which at least one of the two grinding disks (2, 3) is rotatably operated, wherein at least the grinding disk (3) of the two grinding disks (2, 3) which is rotatably operated by the drive unit (4) is coupled to the drive unit (4) directly or indirectly via a central interlocking connection, wherein this central interlocking connection is designed as a shaft-hub connection of a direct torque transmission from the drive unit (4) directly or indirectly to the grinding disk (2, 3), **characterized in that** the first grinding disk (2) of the two grinding disks (2, 3) is in positive engagement with its centric inner contour (29') with a centric contour projection (33) of a carrier (24') of the first grinding disk carrier (M1) and that this central interlocking connection is designed as a continuous shaft-hub connection.

2. Grinder (1) according to claim 1, **characterized in that** at least one of the two grinding disks (2, 3) or both grinding disks (2, 3) have an aperture with a centric inner contour (29, 29').

3. Grinder (1) according to claim 2, **characterized in that** the grinding disk (3) of the two grinding disks (2, 3) which is rotatably driven by the drive unit (4) is in positive engagement with its aperture with the centric inner contour (29) with a centric contour (25) of a carrier (24) of the second grinding disk carrier (M2), wherein the carrier (24) is connected to a drive shaft (21) of the drive unit (4).

4. Grinder (1) according to claim 3, **characterized in that** the carrier (24) of the second grinding disk carrier (M2) has a ring section (26) which is arranged around the centric contour (25).

5. Grinder (1) according to claim 4, **characterized in that** the carrier (24) of the second grinding disk carrier (M2) has a clearance (26a) which is defined by the ring section (26) and the centric contour (25).

6. Grinder (1) according to one of the preceding claims, **characterized in that** the contour projection (33) of the carrier (24') of the first grinding disk carrier (M1) has a centric aperture (5a).

7. Grinder (1) according to one of the preceding claims, **characterized in that** both grinding disks (2, 3) each have radially projecting lugs (31, 31') which are integrally formed on the outer circumferences of the two grinding disks (2, 3) in a regularly distributed manner.

8. Grinder (1) according to claim 7, **characterized in that** the first grinding disk (2) of the two grinding disks (2, 3) is inserted into a carrier (24') of the first grinding disk carrier (M1) and is axially guided in the carrier (24') and axially secured by means of the lugs (31').

9. Grinder (1) according to claim 8, **characterized in that** the first grinding disk (2) of the two grinding disks (2, 3) is inserted into the carrier (24') of the first grinding disk carrier (M1) in such a way that the lugs (31') are each guided axially displaceably in a groove (35) and are received in an axially secured manner.

10. Grinder (1) according to one of previous claims, **characterized in that** tab-like projections (27) are arranged in a regularly distributed manner on the outer circumference of the ring section (26) of the carrier (24) of the second grinding disk carrier (M2), which projections (27) project from the ring section (26) of the carrier (24) of the second grinding disk carrier (M2), wherein the tab-like projections (27) each have an indent (28) formed therein, which engages with a respective lug (31) of the second grinding disk (3) of the two grinding disks (2, 3), which is rotatably driven by the drive unit (4).

11. Grinder (1) according to one of the preceding claims, **characterized in that** the grinder (1) is designed as a disk grinder.

12. Grinder (1) according to one of the preceding claims, **characterized in that** the centric inner contours (29, 29') of the two grinding disks (2, 3), the contour projection (33) of the carrier (24') of the first grinding disk carrier (M1) and the centric contour (25) of the carrier (24) of the second grinding disk carrier (M2) are formed as a polygon, preferably hexagon, triangle, square, oval, ellipse and the like, wherein the centric inner contour (29') of the first grinding disk (2) of the two grinding disks (2, 3) and the contour projection (33) of the carrier (24') of the first grinding disk carrier (M1) correspond with each other, and wherein the centric inner contour (29) of the second grinding disk (3) of the two grinding disks (2, 3), which is rotatably driven by the drive unit (4), and the centric contour (25) of the carrier (24) of the second grinding disk carrier (M2) correspond with each other.

13. Grinder (1) according to one of the preceding claims, **characterized in that** the two grinding disks (2, 3) are of identical design.

14. Grinding disks (2, 3) for a grinder (1) according to one of the preceding claims, wherein both grinding disks (2, 3) each have an aperture with a centric inner contour (29, 29'), **characterized in that** both grinding disks (2, 3) each have radially projecting lugs (31, 31') which are formed on the outer circumferences of both grinding disks (2, 3) in a regularly distributed manner.

15. Coffee machine, in particular fully automatic coffee machine having at least one grinder (1) according to one of claims 1 to 13.

## Revendications

1. Broyeur (1) pour broyer des grains de café (5), le broyeur (1) présentant un premier support de disque de broyage (M1) avec un premier disque de broyage (2), un second support de disque de broyage (M2) avec un second disque de broyage (3) et une unité d'entraînement (4), au moyen de laquelle au moins l'un des deux disques de broyage (2, 3) est mis en rotation, au moins ledit disque de broyage (3) des deux disques de broyage (2, 3) qui est mis en rotation au moyen de l'unité d'entraînement (4) étant accouplé directement ou indirectement à l'unité d'entraînement (4) au moyen d'une liaison de verrouillage central, ladite liaison de verrouillage central étant réalisée sous la forme d'une liaison arbre-moyeu pour un transfert de couple direct de l'unité d'entraînement (4) directement ou indirectement au disque de broyage (2, 3), **caractérisé en ce que** le premier disque de broyage (2) des deux disques de broyage (2, 3) s'engage par verrouillage, par son contour intérieur central (29'), avec une saillie de contour centrale (33) d'un support (24') du premier support de disque de broyage (M1) et que cette liaison de verrouillage central est réalisée sous la forme d'une liaison arbre-moyeu continue.

2. Broyeur (1) selon la revendication 1, **caractérisé en ce qu**'au moins l'un des deux disques de broyage (2, 3) ou les deux disques de broyage (2, 3) présentent une brèche avec un contour intérieur central (29, 29').

3. Broyeur (1) selon la revendication 2, **caractérisé en ce que** ledit disque de broyage (3) des deux disques de broyage (2, 3) qui est mis en rotation au moyen de l'unité d'entraînement (4) s'engage par verrouillage, par sa brèche avec le contour intérieur central (29), avec un contour central (25) d'un support (24) du second support de disque de broyage (M2), le support (24) étant relié à un arbre d'entraînement (21) de l'unité d'entraînement (4).

4. Broyeur (1) selon la revendication 3, **caractérisé en ce que** le support (24) du second support de disque de broyage (M2) présente une section annulaire (26) disposée autour du contour central (25).

5. Broyeur (1) selon la revendication 4, **caractérisé en ce que** le support (24) du second support de disque de broyage (M2) présente un espace libre (26a) défini par la section annulaire (26) et le contour central (25).

6. Broyeur (1) selon l'une des revendications précédentes, **caractérisé en ce que** la saillie de contour (33) du support (24') du premier support de disque de broyage (M1) présente une brèche centrale (5a).

7. Broyeur (1) selon l'une des revendications précédentes, **caractérisé en ce que** les deux disques de broyage (2, 3) présentent chacun des ergots (31, 31') en saillie radiale, formés sur les circonférences extérieures des deux disques de broyage (2, 3), répartis régulièrement.

8. Broyeur (1) selon la revendication 7, **caractérisé en ce que** le premier disque de broyage (2) des deux disques de broyage (2, 3) est inséré dans un support (24') du premier support de disque de broyage (M1) et est guidé axialement dans le support (24') et est bloqué axialement au moyen des ergots (31').

9. Broyeur (1) selon la revendication 8, **caractérisé en ce que** le premier disque de broyage (2) des deux disques de broyage (2, 3) est inséré dans le support (24') du premier support de disque de broyage (M1) de telle sorte que les ergots (31') sont guidés chacun de manière coulissant axialement dans une rainure (35) et sont logés de manière à être bloqués axialement.

10. Broyeur (1) selon l'une des revendications précédentes, **caractérisé en ce que** des saillies en forme de languettes (27) sont disposées sur la circonférence extérieure de la section annulaire (26) du support (24) du second support de disque de broyage (M2), réparties régulièrement, qui font saillie de la section annulaire (26) du support (24) du second support de disque de broyage (M2), les saillies en forme de languettes (27) présentant chacune un évidement formé (28) qui s'engage avec un ergot respectif (31) du second disque de broyage (3) des deux disques de broyage (2, 3) qui est mis en rotation au moyen de l'unité d'entraînement (4).

11. Broyeur (1) selon l'une des revendications précédentes, **caractérisé en ce que** le broyeur (1) est réalisé sous forme de broyeur à disques.

12. Broyeur (1) selon l'une des revendications précédentes, **caractérisé en ce que** les contours intérieurs centraux (29, 29') des deux disques de broyage (2, 3), la saillie de contour (33) du support (24') du premier support de disque de broyage (M1) et le contour central (25) du support (24) du second support de disque de broyage (M2) ont la forme de polygones, de préférence d'hexagones, de triangles, de carrés, d'ovales, d'ellipses et similaires, le contour intérieur central (29') du premier disque de broyage (2) des deux disques de broyage (2, 3) et la saillie de contour (33) du support (24') du premier support de disque de broyage (M1) correspondant entre eux, et dans lequel le contour intérieur central (29) du second disque de broyage (3) des deux disques de broyage (2, 3), qui est mis en rotation au moyen de l'unité d'entraînement (4), et le contour central (25) du support (24) du second support de disque de broyage (M2) correspondent entre eux.

13. Broyeur (1) selon l'une des revendications précédentes, **caractérisé en ce que** les deux disques de broyage (2, 3) sont identiques.

14. Disques de broyage (2, 3) pour un broyeur (1) selon l'une des revendications précédentes, les deux disques de broyage (2, 3) présentant chacun une brèche avec un contour intérieur central (29, 29'), **caractérisés en ce que** les deux disques de broyage (2, 3) présentent chacun des ergots (31, 31') en saillie radiale, qui sont formés sur les circonférences extérieures des deux disques de broyage (2, 3), respectivement répartis régulièrement.

15. Machine à café, en particulier machine à café automatique avec au moins un broyeur (1) selon l'une des revendications 1 à 13.
